## Europäisches Patentamt

## European Patent Office

## Office européen des brevets

(11) Veröffentlichungsnummer: **0 114 327**
**B1**

(12) # EUROPÄISCHE PATENTSCHRIFT

(45) Veröffentlichungstag der Patentschrift:
18.03.87

(51) Int. Cl.⁴: **F 16 C 11/06,** G 01 M 13/02

(21) Anmeldenummer: **83112734.5**

(22) Anmeldetag: **17.12.83**

(54) **Spielfreies Kugelgelenk, insbesondere für Prüfeinrichtungen, und Gelenkanordnung mit solchen Kugelgelenken.**

(30) Priorität: **19.01.83 DE 3301543**
**19.03.83 DE 3310064**

(43) Veröffentlichungstag der Anmeldung:
**01.08.84 Patentblatt 84/31**

(45) Bekanntmachung des Hinweises auf die Patenterteilung:
**18.03.87 Patentblatt 87/12**

(84) Benannte Vertragsstaaten:
**CH DE FR GB LI**

(56) Entgegenhaltungen:
**FR-A-1 369 413**
**FR-A-2 505 952**
**GB-A-2 074 337**
**US-A-3 744 859**

(73) Patentinhaber: **CARL SCHENCK AG,
Landwehrstrasse 55 Postfach 40 18, D-6100
Darmstadt (DE)**

(72) Erfinder: **Godau, Siegfried, Georg- Büchner-
Strasse 22, D-6103 Griesheim (DE)**
Erfinder: **Sandner, Rudolf, Fallitorstrasse 37a,
D-6061 Biebesheim (DE)**
Erfinder: **Keller, Günter, Am Felsenkeller 47,
D-6101 Modautal 1 (DE)**
Erfinder: **Hintz, Gerhard, Holzgasse 44, D-6101
Rossdorf (DE)**
Erfinder: **Pohl, Andreas, Am Herrenhof 9, D-6102
Pfungstadt (DE)**
Erfinder: **Zuber, Günter, Berliner Strasse 16, D-6101
Messel (DE)**

(74) Vertreter: **Brand, Fritz, Dipl.- Ing., Carl Schenck
AG Patentabteilung Landwehrstrasse 55
Postfach 4018, D-6100 Darmstadt (DE)**

EP 0 114 327 B1

**Beschreibung**

Die Erfindung betrifft ein spielfreies, bewegliches Kugelgelenk für Prüfeinrichtungen, mit einem Kugelkopf, der einen Kugelzapfen aufweist, an dem im wesentlichen in der Zapfenachse wirkende Zug- und Druckkräfte angreifen, mit zwei Lagerschalen zur gelenkigen Lagerung des Kugelkopfes, von denen eine Lagerschale einen Durchbruch für den Kugelzapfen aufweist, wobei die Trennebene zwischen den beiden Lagerschalen im wesentlichen senkrecht zur Zapfenachse bzw. zur Belastungsrichtung liegt und zwischen den Lagerschalen ein Abstand bzw. Spalt verbleibt, sowie eine Gelenkanordnung mit solchen Kugelgelenken.

Bei einem bekannten spielfreien Kugelgelenk, das in erster Linie bei Lenkgestängen von Fahrzeugen verwendet wird (DE-B-1 916 579), sind die Lagerkörper bzw. Lagerschalen elastisch ausgebildet. Ein solches Gelenk ist für hohe Kräfte nicht geeignet und weist keine Nachstellmöglichkeit auf. Bei Kugelgelenken die beispielsweise bei Prüfeinrichtungen verwendet werden, darf bei Kraftumkehr (Zug- Druck) kein Spiel vorhanden sein. Trotzdem soll das Gelenk leicht beweglich sein und hohe Prüfkräfte übertragen.

Aus der GB-A-2 074 337 ist eine feststellbare Klemmvorrichtung (Klemmgelenk) mit einer Gelenkkugel zur Abstützung eines optischen Instruments bekannt. Die Vorrichtung weist eine Gelenkkugel und zwei Lagerschalen mit konischen Lagerflächen auf. Eine als Bremsscheibe bezeichnete Lagerschale kann zur Blockierung des Gelenks über Tellerfedern gegen die Gelenkkugel bzw. die zweite Lagerschale gedrückt werden. Die Lösung der Klemmung ist über einen Ringkolben möglich, der in der Stützschale angeordnet ist und auf die als Bremsscheibe ausgebildete Lagerschale wirkt. Die bekannte Vorrichtung dient zur Halterung und Einstellung von optischen Instrumenten.

Bei der Prüfung von Fahrzeugen unter Bedingungen, die dem Fahrversuch auf der Straße entsprechen, werden auf Prüfständen Kräfte in den drei Achsrichtungen x, y, z eines räumlichen Koordinatensystems in die Fahrzeugräder oder in die die Räder ersetzenden Krafteinleitungselemente eingeleitet. Bei Achs- und Karosserieprüfständen ist es daher wünschenswert, die von der Prüfeinrichtung in das Prüfobjekt einzuleitenden Kräfte an einem theoretischen Krafteinleitungspunkt aufzubringen, an dem die Kräfte in Wirklichkeit, z. B. beim Betrieb eines Fahrzeugs auf der Straße, auftreten. Ein solcher theoretischer Krafteinleitungspunkt ist z.B. der Radaufstandspunkt (RAP). Die gemeinsame Einleitung von mehreren Kräften an einem Punkt bereitet jedoch Schwierigkeiten.

Die bisher bekannten Lösungen bei Achs- und Karosserieprüfständen weisen eine Reihe von Nachteilen auf, wie z.B. komplizierter Aufbau, zu großer Abstand der tatsächlichen Krafteinleitungspunkte vom theoretisch richtigen Krafteinleitungspunkt, großes Gewicht bzw. große Masse, Spiel an den Gelenken (ergibt Probleme bei geregelten Einrichtungen sowie Verschleißprobleme), schlechte Zugänglichkeit u.a..

Es ist Aufgabe der vorliegenden Erfindung, ein insbesondere für Prüfeinrichtungen verwendbares spielfreies Kugelgelenk zu schaffen, das die Übertragung hoher, insbesondere dynamischer Kräfte ermöglicht, leicht nachstellbar ist und geringe Reibung im Gelenk aufweist, d.h. leicht beweglich ist. Diese Aufgabe wird durch die in Patentanspruch 1 angegebenen Merkmale gelöst.

Eine weitere Aufgabe der Erfindung besteht darin, die bei Achs- und Karosserieprüfständen entstehenden Schwierigkeiten bei der gemeinsamen Einleitung von mehreren Kräften an einem Punkt zu beseitigen.

Durch die Verwendung von Klemm- und Entlastungselementen zur Verspannung der beiden Lagerschalen gegeneinander bzw. gegen den Kugelkopf kann das Spiel des Gelenks leicht eingestellt und, falls erforderlich, nachgestellt werden. Insbesondere wird jedoch durch die Vorspannung der Klemmelemente erreicht, daß die dynamische Belastung dieser Elemente sehr niedrig bleibt. Ohne Entlastungs- oder Löseelemente müßten die Klemmelemente für die Übertragung der gleichen Kräfte um ein Vielfaches stärker dimensioniert werden. Darüberhinaus wären zusätzliche Sicherungen an den Klemmelementen gegen das Lösen dieser Elemente erforderlich.

Eine zweckmäßige Ausgestaltung ergibt sich, wenn die Klemm- und Entlastungselemente als Schrauben ausgebildet werden, so daß die Einstellung und Nachstellung des Lagers auf einfache Weise vorgenommen werden kann. Anstelle der Löseschrauben können auch geeignet ausgebildete Federelemente oder Zwischenelemente verwendet werden, deren Federrate vorteilhafterweise größer ist als die Federrate der Klemmschrauben. Zur Verbesserung des Verschleiß- und/oder Reibverhaltens kann der Kugelkopf und/oder die Lagerschalen mit einer Beschichtung versehen werden, die günstige Reib- und Verschleißwerte aufweist.

Die Vorteile der erfindungsgemäßen Gelenkanordnung sind insbesondere darin zu sehen, daß die einzelnen Gelenkpunkte einen sehr kleinen Abstand zueinander aufweisen, leicht nachstellbar sind und daß die Gelenkanordnung eine kleine Masse hat. Die Spielfreiheit der Gelenkanordnung vermeidet Schwierigkeiten, wie sie beispielsweise bei geregelten Anlagen bei der Aufbringung von Kräften mit wechselnder Richtung (Zug/Druck) auftreten können.

Die weiteren Unteransprüche betreffen andere vorteilhafte Ausgestaltungen der Erfindung.

Die Erfindung wird nachstehend an Ausführungsbeispielen in den Zeichnugen dargestellt und in der Beschreibung näher erläutert. Es zeigen:

Fig. 1 Schnitt durch ein spielfreies Kugelgelenk nach der Erfindung mit Klemm- und Löseschrauben,

Fig. 2 Schnitt durch ein spielfreies Kugelgelenk mit Gewindering und Klemmschrauben (Fig. 2a) bzw. mit Gewindering und Löseschrauben (Fig. 2b)

Fig. 3 Prüfaufbau mit einer Gelenkanordnung mit drei spielfreien Kugelgelenken für die Einleitung von drei Kräften in ein Prüfobjekt, beispielsweise in eine Fahrzeugachse

Fig. 4 Schnitte durch den Grundkörper einer Gelenkanordnung mit drei spielfreien Kugelgelenken in drei Ebenen, die jeweils durch den theoretischen Krafteinleitungspunkt gehen, und zwar

Fig. 4a Schnitt in der xz-Ebene,

Fig. 4b Schnitt in der xy-Ebene,

Fig. 4c Schnitt in der yz-Ebene

Fig. 5 Gelenkanordnung mit drei spielfreien Kugelgelenken in einem Grundkörper und einem Krafteinleitungselement (perspektivisch).

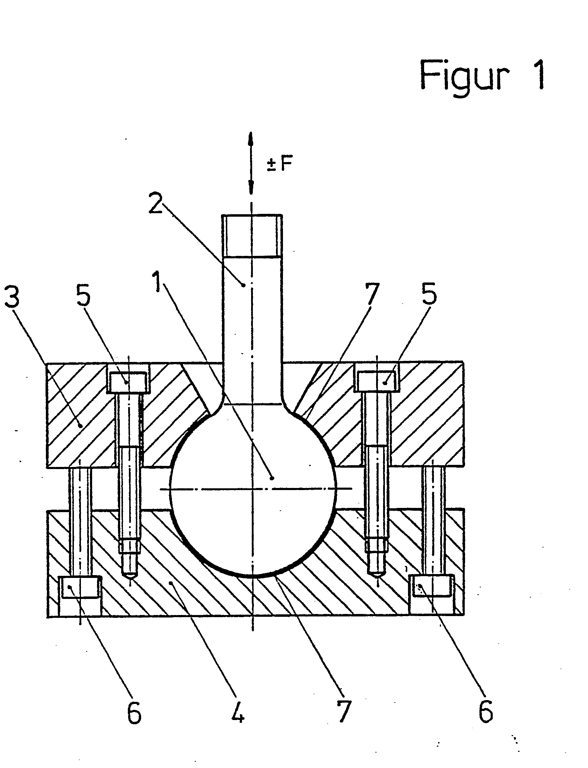

Das Kugelgelenk nach Fig. 1 weist einen Kugelkopf 1 mit einem Kugelzapfen 2 auf, an den ein Kraftübertragungselement (nicht dargestellt) zur Einleitung von Zug- und Druckkräften ( ± F) angeschlossen werden kann. Der Kugelkopf 1 ist in zwei Lagerschalen 3 und 4 aufgenommen. Die Lagerschale 3 weist einen Durchbruch zur Durchführung des Kugelzapfens 2 auf. Die Lagerschale 4 kann in nicht dargestellter Weise z.B. mit dem zu prüfenden Bauteil verbunden sein. Die Trennebene zwischen den beiden Lagerschalen 3 und 4 liegt etwa senkrecht zur Belastungsrichtung (Kraft ± F) bzw. zur Achse des Kugelzapfens 2.

Die beiden Lagerschalen 3 und 4 sind durch Klemmschrauben 5, die an der Lagerschale 3 angeordnet sind, gegeneinander bzw. gegen den Kugelkopf 1 verspannt. Die Größe und Anzahl der Schrauben sowie die Vorspannkraft der Klemmschrauben 5 wird so gewählt, daß die am Kugelgelenk auftretenden statischen und dynamischen Belastungskräfte einwandfrei übertragen werden können.

Die Klemmkraft der Klemmschrauben 5 auf den Kugelkopf 1 wird durch Löseschrauben 6, die in der Lagerschale 4 eingesetzt sind und gegen die Lagerschale 3 drücken, teilweise wieder aufgehoben ud zwar so weit, bis das gewünschte Spiel bzw. die gewünschte Leichtgängigkeit zwischen Kugelkopf und Lagerschalen hergestellt ist. Die Klemmschrauben 5 werden hierbei hoch vorgespannt. Die hohe Vorspannung bewirkt, daß bei allen dynamischen Belastungen z.B. bei Schwellbelastungen oder bei Wechsellasten, die Klemmschrauben 5 nur einer kleinen zusätzlichen Belastung ausgesetzt sind, da der dynamische Betriebslastanteil der Klemmschrauben klein bleibt. Das gleiche trifft zu, wenn die Klemmschrauben durch harte Federelement, Zwischenelemente oder in anderer geeigneter Weise vorgespannt werden.

Mit Hilfe der Löseschrauben 6 ist es weiterhin möglich, das Spiel zwischen Kugelkopf 1 und Lagerschalen 3, 4 bei Verschleiß nachzustellen. Hierzu werden die Löseschrauben 6 so weit gelöst, bis das gewünschte Spiel am Kugelgelenk wieder hergestellt ist.

Um die Reibung des Lagers möglichst niedrig zu halten, können der Kugelkopf und/oder die Lagerschalen mit einer Gleitschicht 7 aus einem geeigneten Werkstoff, z.B. PTFE, Polyimid, Lagerbronze usw. beschichtet werden.

Die Größe und Anzahl der Löseschrauben 6 sowie die Abstützlänge dieser Schrauben wird so gewählt, daß die Löseschrauben eine möglichst harte Feder darstellen. Unter Abstützlänge der Löseschrauben 6 ist hierbei im wesentlichen die freie Länge der Schrauben zwischen den beiden Lagerschalen 3 und 4 zu verstehen.

Die Klemmschrauben 3 und die Löseschrauben 4 können entgegen der Darstellung in Fig. 1 auch an einer Lagerschale, d.h. entweder an der Lagerschale 3 oder an der Lagerschale 4 angeordnet werden.

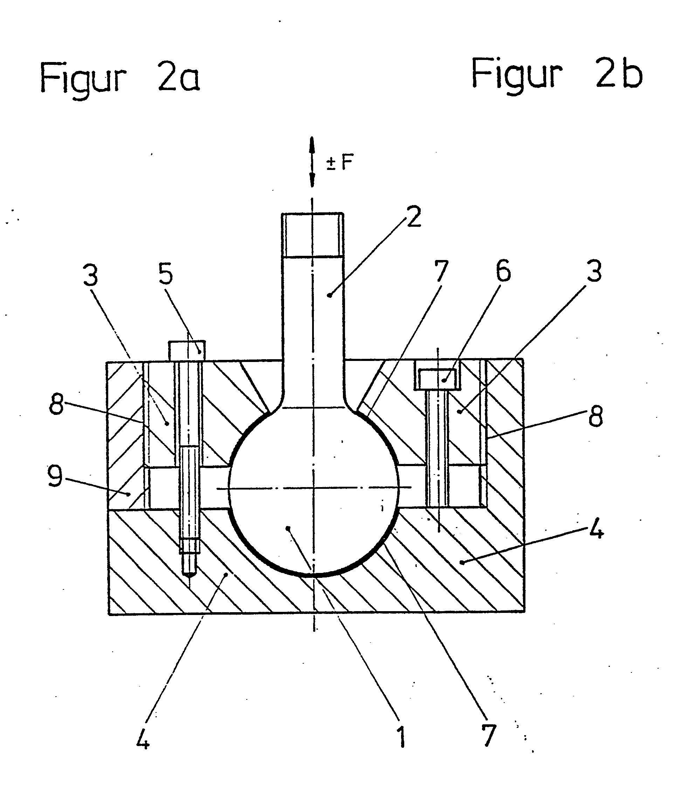

Fig. 2 zeigt Anordnungen, bei denen die Klemm- oder Löseschrauben durch die Anordnung von Gewinden an einer Lagerschale und zweckentsprechende Gegengewinde ersetzt sind.

In Fig. 2a weist die Lagerschale 3 an ihrem äußeren Umfang ein Gewinde 8 auf, mit dem sie in einem Gewindering 9 geführt ist. Die Lagerschale wird durch die Klemmschrauben 5 gegen den Kugelkopf 1 bzw. die Lagerschale 4 verspannt. Mit Hilfe des Gewinderinges 9 kann in ähnlicher Weise wie mit den Löseschrauben das Lager eingestellt bzw. die Vorspannung der Klemmschrauben aufgebracht werden.

Im Ausführungsbeispiel nach Fig. 2b ist die Lagerschale 3 mit Hilfe eines Gewindes 8 in die Lagerschale 4 eingesetzt und gegen den Kugelkopf 1 bzw. die Lagerschale 4 verspannt. Mit den Löseschrauben 6 wird das Gelenk wie bei Fig. 1 beschrieben eingestellt.

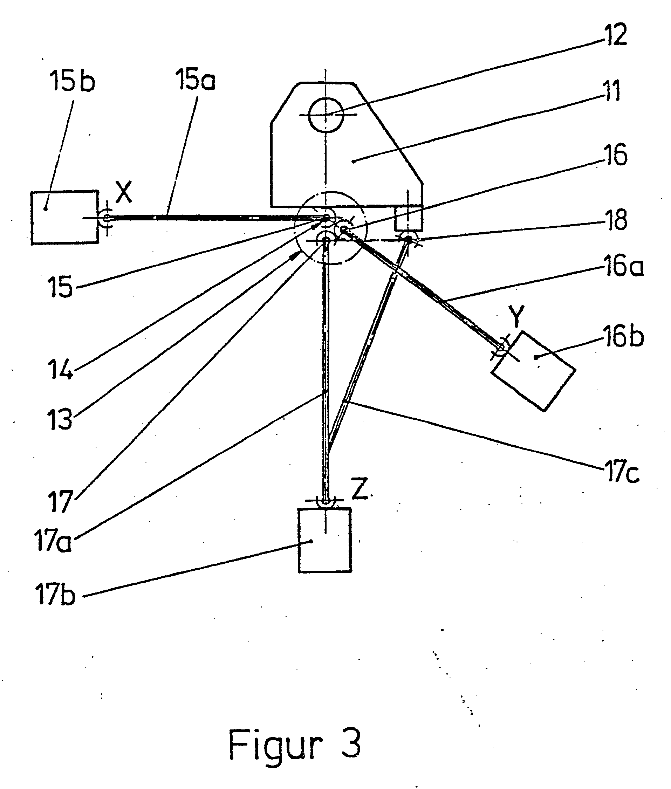

In Fig. 3 ist in einer Schemaskizze ein Prüfaufbau dargestellt mit einem Krafteinleitungselement 11, das beispielsweise als Radersatz eines Achs- oder Fahrzeugprüfstandes dient und das in geeigneter Weise mit der zu prüfenden Achse 12 verbunden ist. Das Krafteinleitungselement 11 weist eine Gelenkanordnung oder einen Gelenkknoten 13 auf, der am theoretischen Krafteinleitungspunkt oder Radaufstandspunkt (RAP) 14 angeordnet ist. Der Gelenkknoten 13 besteht aus drei spielfreien Kugelgelenken 15, 16, 17, die mit Kraftübertragungselementen, z.B. Zug-/Druckstäben 15a, 16a, 17a verbunden sind. Über die Kraftübertragungselemente und über Betätigungselemente 15b, 16b, 17b können z.B. Kräfte oder Wege in den Gelenkknoten 13 eingeleitet werden.

Die Betätigungselemente 15b, 16b, 17b können z.B. als hydraulische Betätigungszylinder ausgebildet sein.

Bei der dargestellten Anordnung fällt der theoretische Krafteinleitungspunkt bzw. Radaufstandspunkt 14 mit dem Mittelpunkt des Kugelgelenks 15 zusammen, d.h. das Kugelgelenk 15 ist am theoretischen Krafteinleitungspunkt 14 angeordnet. Die beiden übrigen Gelenke 16 und 17 liegen in unmittelbarer Nähe des Gelenks 15 bzw. des RAP 14.

Die Wirkungsrichtungen der Stäbe 15a, 16a, 17a stehen im wesentlichen senkrecht aufeinander und schneiden sich im Radaufstandspunkt 14 bzw. im theoretischen Krafteinleitungspunkt. Die Wirkungsrichtung des Stabes 15a definiert die x-Richtung, die des Stabes 16a die y-Richtung und die des Stabes 17a die z-Richtung. Die Stäbe 15a, 16a bilden daher die xy-Ebene, die Stäbe 15a, 17a die xz-Ebene und die Stäbe 16a, 17a die yz-Ebene.

Am Krafteinleitungselement 11 ist ein weiteres Gelenk 18 angeordnet. Dieses Gelenk ist über einen Hilfsstab 17c mit dem Stab 17a verbunden und dient zur Drehmomentabstützung des an der Achse 12 drehbar gelagerten Krafteinleitungselements 11, z.B. bei der Einleitung von Längskräften über das Gelenk 15 und den Stab 15a. Wenn das Krafteinleitungselement 11 fest mit der Achse 12 verbunden ist, z.B. bei Prüfungen mit gebremstem Rad, entfällt der Hilfsstab 17c bzw. er wird abgeschaltet oder entfernt.

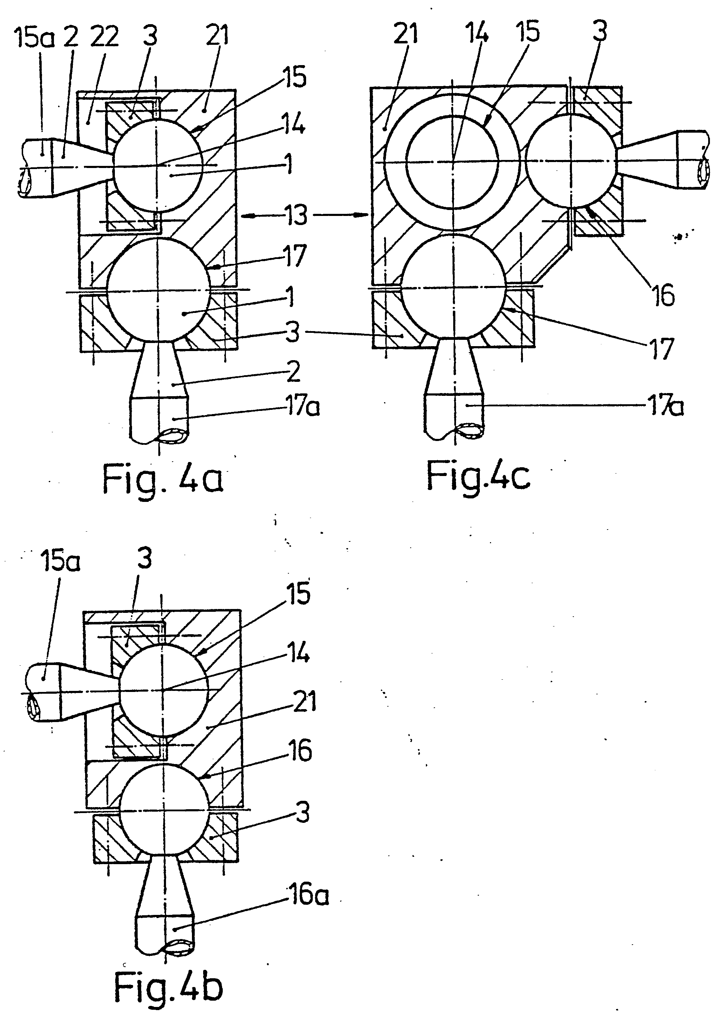

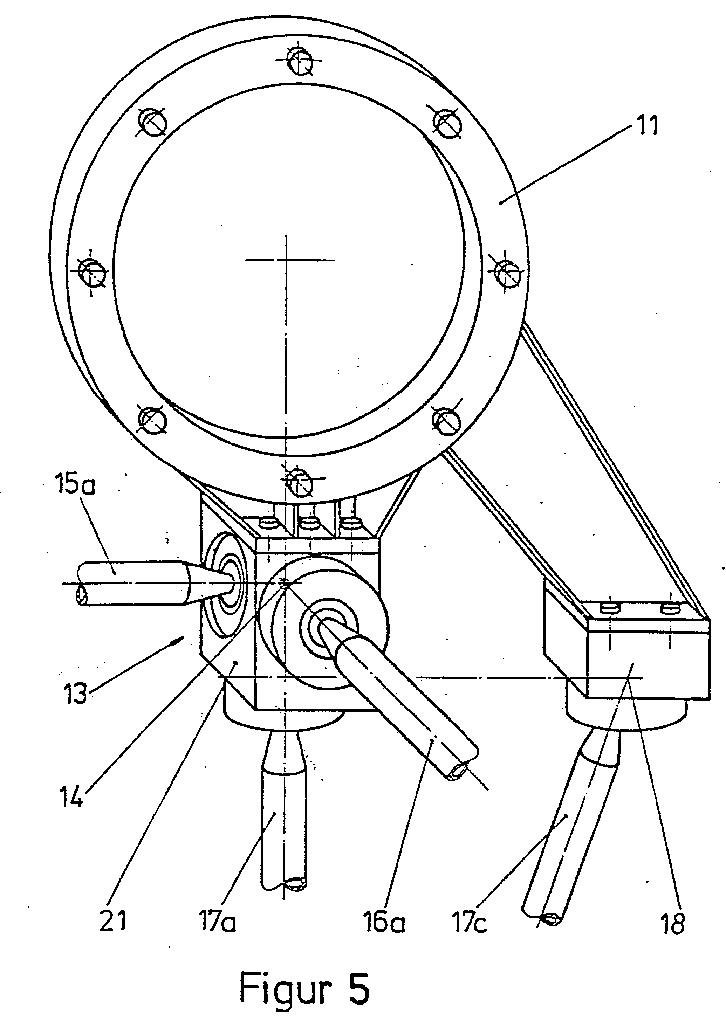

In Fig. 5 ist die Gelenkanordnung 13 mit dem Krafteinleitungselement 11 und die Anlekung des Hilfsstabes 17c in einer perspektivischen Skizze dargestellt. Die Bezugsziffern entsprechen denen der Fig. 3. Die Skizze zeigt auch den in Fig. 4a -c mit weiteren Einzelheiten dargestellten Grundkörper 21 der Gelenkanordnung in einer konkreteren, jedoch immer noch schematisch dargestellten Form. Das Krafteinleitungselement 11 ist in Fig. 5 als ein im wesentlichen rundes Element dargestellt. Es kann jedoch auch, wie in Fig. 3 angedeutet, Trapezform oder eine andere geeignete Form aufweisen.

Die in den Figuren 4a - c dargestellten Schnitte durch die Gelenkanordnung bzw. den Gelenkknoten 13 mit einem Grundkörper 21 gehen jeweils durch den theoretischen Krafteinleitungspunkt bzw. Radaufstandspunkt 14. Der Grundkörper 21 kann beispielsweise als kubischer oder rechteckiger Körper ausgebildet sein und zylindrische Ansätze für einzelne Kugelgelenke aufweisen.

Die Fig. 4a mit dem Schnitt in der xz-Ebene zeigt das spielfreie Kugelgelenk 15 mit dem Kugelkopf 1 und dem Kugelzapfen 2. Der Kugelzapfen 2 ist mit dem Stab 15a in geeigneter Weise verbunden, z.B. verschweißt.

Das Kugelgelenk 15 ist in einer Ausdrehung 22 des Grundkörpers 21 angeordnet. In die Ausdrehung 22 ist eine mit einem Durchbruch versehene Lagerschale 3 eingesetzt, über die der Kugelkopf 1 mit dem Grundkörper 21 in der oben beschriebenen Weise verbunden ist. Die hierfür erforderlichen Klemm- und Löseschrauben sind an der Lagerschale 3 angeordnet und der Übersichtlichkeit halber nur schematisch 5 angedeutet.

Unterhalb des Kugelgelenks 15 ist das Kugelgelenk 17 im Grundkörper 22 angeordnet. Das Kugelgelenk 17 ist größer ausgebildet als das Kugelgelenk 15, so daß über das Gelenk 17 höhere Kräfte übertragbar sind.

In gleicher Weise wie bei Kugelgelenk 15 ist bei Kugelgelenk 17 ein Kugelkopf 1 mit einem Kugelzapfen 2 und dieser mit dem Stab 17a verbunden. Über eine mit einem Durchbruch versehene Lagerschale 3 ist der Kugelkopf 1 mit Hilfe von Klemm- und Löseschrauben spielfrei im Grundkörper 21 gelagert.

Die Figuren 4b und 4c zeigen die der Figur 4a entsprechenden Schnitte in der durch den Krafteinleitungspunkt 14 gehenden xy-Ebene und der yz-Ebene mit dem Radaufstandspunkt 14, den Kugelgeisnken 15, 16, 17, den Zug-/Druckstäben 15a, 16a, 17a, den Lagerschalen 3 sowie dem Grundkörper 21. In der Figur 4c sind alle drei Kugelgelenke erkennbar, da sie in der hier dargestellten yz-Schnittebene liegen.

Die Kugelgelenke können auch so angeordnet werden, daß alle Gelenke in der xy- oder xz-Ebene liegen.

Der Gelenkknoten 13 kann anstelle von drei Kugelgelenken auch lediglich zwei Gelenke aufweisen.

Bei einem Gelenkknoten mit drei Gelenken können diese auch mit gleichem Abstand zu einem theoretischen Krafteinleitungspunkt angeordnet werden.

Die einzelnen Kugelgelenke können in nicht dargestellter Weise durch Manschetten oder ähnliche Dichtelemente z.B. gegen Staub abgedichtet werden. Die Manschetten oder Dichtelemente können z.B. zwischen den Zug-/Druckstäben 15a, 16a, 17a und dem Grundkörper 21 angeordnet sein.

## Patentansprüche

1. Spielfreies, bewegliches Kugelgelenk für Prüfeinrichtungen, mit einem Kugelkopf (1), der einen Kugelzapfen (2) aufweist, an dem im wesentlichen in der Zapfenachse wirkende Zug- und Druckkräfte angreifen, mit zwei Lagerschalen (3, 4) zur gelenkigen Lagerung des Kugelkopfes (1), von denen eine Lagerschale (3) einen Durchbruch für den Kugelzapfen (2) aufweist, wobei die Trennfläche zwischen den beiden Lagerschalen (3, 4) im wesentlichen senkrecht zur Zapfenachse bzw. zur Belastungsrichtung liegt und zwischen den Lagerschalen (3, 4) ein Abstand bzw. Spalt verbleibt, gekennzeichnet durch Klemmelemente (5), mit denen die beiden Lagerschalen (3, 4) gegeneinander bzw. gegen den Kugelkopf (*) verspannbar sind, und durch Entlastungs- und/ oder Löseelemente (6, 9), die zur Einstellung der Vorspannung und/oder des Lagerspiels der Klemmkraft der Klemmelemente (5) entgegenwirken, wobei sowohl für die Klemmelemente (5) als auch für die Entlastungs- und/oder Löseelemente (6, 9) eine an die auftretenden Belastungskräfte angepaßte Vorspannung gewählt wird.

2. Spielfreies Kugelgelenk nach Anspruch 1, dadurch gekennzeichnet, daß die Klemmelemente als Klemmschrauben (5) ausgebildet sind.

3. Spielfreies Kugelgelenk nach Anspruch 1 oder 2, dadurch gekennzeichnet, daß die Entlastungs- und/oder Löseelemente als Löseschrauben (6) ausgebildet sind, die an einer Lagerschale (3, 4) angeordnet sind und sich auf die zweite Lagerschale (4, 3) abstützen.

4. Spielfreies Kugelgelenk nach Anspruch 2 und 3, dadurch gekennzeichnet, daß die Klemm- und Löseschrauben (5, 6) an der gleichen Lagerschale angeordnet sind.

5. Spielfreies Kugelgelenk nach einem der Ansprüche 2 bis 4, dadurch gekennzeichnet, daß die Länge der Klemmschrauben (5) groß ist im Verhältnis zur Abstützlänge der Löseschrauben (6).

6. Spielfreies Kugelgelenk nach Anspruch 1, dadurch gekennzeichnet, daß die Entlastungselemente als Federn oder Zwischenelemente mit hoher Federrate im Vergleich zur Federrate der Klemmschrauben (5) ausgebildet sind.

7. Spielfreies Kugelgelenk nach einem der Ansprüche 1 bis 6, dadurch gekennzeichnet, daß die Lagerflächen des Kugelkopfes (1) und/oder der Lagerschalen (3, 4) mit einer Beschichtung (7) versehen sind, die ein günstiges Reib- und/oder Verschleißverhalten aufweist.

8. Gelenkanordnug mit mindestens zwei spielfreien Kugelgelenken nach einem oder mehreren der vorhergehenden Ansprüche, dadurch gekennzeichnet, daß je eine Lagerschale eines jeden Kugelgelenks (15, 16, 17) durch einen die Kugelgelenke (15, 16, 17) aufnehmenden gemeinsamen Grundkörper (21) gebildet ist.

9. Gelenkanordnung nach Anspruch 6, dadurch gekennzeichnet, daß die Kugelgelenke (15, 16, 17) so im Grundkörper (21) angeordnet sind, daß im wesentlichen senkrecht zueinander wirkende Kräfte übertragbar sind.

10. Gelenkanordnung nach Anspruch 8 oder 9, dadurch gekennzeichnet, daß die Kugelgelenke (15, 16, 17) mit kleinstmöglichem Abstand zueinander angeordnet sind.

11. Gelenkanordnung nach einem der Ansprüche 8 bis 10, dadurch gekennzeichnet, daß ein Kugelgelenk (15) in einem theoretischen Krafteinleitungspunkt (14) und das zweite Kugelgelenk (16, 17) oder weitere Gelenke mit Abstand zum theoretischen Krafteinleitungspunkt (14) angeordnet sind.

12. Gelenkanordnung nach einem der Ansprüche 8 bis 11, dadurch gekennzeichnet, daß alle Kugelgelenke (15, 16, 17) mit gleichem Abstand zu einem theoretischen Krafteinleitungspunkt (14) angeordnet sind.

13. Gelenkanordnung nach einem der Ansprüche 8 bis 12, dadurch gekennzeichnet, daß die Kugelgelenke (15, 16, 17) so angeordnet sind, daß die Wirkungsrichtungen der zu übertragenden Kräfte in der Ausgangsstellung der Anordnung durch den theoretischen Krafteinleitungspunkt (14) gehen.

14. Gelenkanordnung nach einem der Ansprüche 8 bis 13, dadurch gekennzeichnet, daß die Kugelgelenke (15, 16, 17) unterschiedliche Größe, insbesondere für die Übertragung unterschiedlich großer Kräfte, aufweisen.

## Claims

1. Play-free, movable ball joint for test equipment, with a ball end (1), which has a ball pin (2) substantially along the pin axis of which tractive and compressive forces act, with two bearing boxes (3, 4) for the articulated bearing of the ball end (1), of which one bearing box (3) has an opening for the ball pin (2), the separating surface between the two bearing boxes (3, 4) lying substantially normal to the pin axis or respectively to the loading direction and a clearance or respectively a gap existing between the bearing boxes (3, 4), characterised by clamping elements (5), by which the two bearing boxes (3, 4) can be braced against each other or respectively against the ball end (1), and by releasing and/or detaching elements (6, 9), which counteract the clamping force of the clamping elements (5) in order to adjust the pre-stressing and/or the bearing play, whereby both for the clamping elements (5) and also for the releasing and/or detaching elements (6, 9) a pre-stressing is selected which is adapted to the occurring load forces.

2. Play-free ball joint according to Claim 1, characterised in that the clamping elements are constructed as clamping screws (5).

3. Play-free ball joint according to Claim 1 or 2, characterised in that the releasing and/or detaching elements are constructed as detaching screws (6) which are arranged on one bearing box (3, 4) and are supported on the second bearing box (4, 3).

4. Play-free ball joint according to Claim 2 and 3, characterised in that the clamping and detaching screws (5, 6) are arranged on the same bearing box.

5. Play-free ball joint according to one of Claims 2 to 4, characterised in that the length of the clamping screws (5) is large in relation to the supporting length of the detaching screws (6).

6. Play-free ball joint according to Claim 1 characterised in that the releasing elements are constructed as springs or intermediate elements with a high spring rate compared with the spring rate of the clamping screws (5).

7. Play-free ball joint according to one of Claims 1 to 6, characterised in that the bearing surfaces of the ball end (1) and/or of the bearing boxes (3, 4) are provided with a coating (7) which has a favourable friction and/or wear behaviour.

8. Joint arrangement with at least two play-free ball joints according to one or more of the preceding Claims, characterised in that in each case one bearing box of each ball joint (15, 16, 17) is formed by a common base body (21) carrying the ball joints (15, 16, 17).

9. Joint arrangement according to Claim 8, characterised in that the ball joints (15, 16, 17) are arranged in the base body (21) such that forces acting substantially normal to each other are able to be transferred.

10. Joint arrangement according to Claim 8 or 9, characterised in that the ball joints (15, 16, 17) are arranged at the smallest possible distance from each other.

11. Joint arrangement according to one of Claims 8 to 10, characterised in that one ball joint (15) is arranged in a theoretical force introduction point (14) and the second ball joint (16, 17) or further joints are arranged at a distance from the theoretical force introduction point (14).

12. Joint arrangement according to one of Claims 8 to 11, characterised in that all ball joints (15, 16, 17) are arranged at the same distance from a theoretical force introduction point (14).

13. Joint arrangement according to one of Claims 8 to 12, characterised in that the ball joints (15, 16, 17) are arranged such that the directions of effect of the forces which are to be transferred in the starting positon of the arrangement pass through the theoretical force introduction point (14).

14. Joint arrangement according to one of Claims 8 to 13, characterised in that the ball joints (15, 16, 17) are of differing size, in particular for the transfer of forces of differing values.

**Revendications**

1. - Rotule mobile sans jeu pour dispositifs de contrôle, comportant une tête sphérique (1) qui comporte un pivot de rotule (2) auquel sont appliquées des forces de traction et de compression agissant sensiblement suivant l'axe du pivot, comportant deux coquilles de coussinet (3, 4) pour le montage articulé de la tête sphérique (1), dont une coquille (3) comporte un passage pour le pivot de rotule (2), la surface de séparation entre les deux coquilles de coussinet (3, 4) étant sensiblement orthogonale à l'axe du pivot ou à la direction des efforts et un intervalle ou une fente demeurant entre les coquilles (3, 4), caractérisée par des éléments de serrage (5) au moyen desquels les deux coquilles (3, 4) peuvent être serrées l'une contre l'autre ou contre la tête sphérique (1), et par des éléments de décharge et/ou de desserrage (6, 9) qui s'opposent à l'établissement de la précontrainte et/ou du jeu de coussinet de la force de serrage des éléments de serrage (5), en choisissant à la fois pour les éléments de serrage (5) et pour les éléments de décharge et/ou de desserrage (6, 9) une précontrainte adaptée aux forces de charge qui apparaissent.

2. - Rotule sans jeu selon la revendication 1, caractérisé en ce que les éléments de serrage sont réalisés sous la forme de vis de serrage (5).

3. - Rotule sans jeu selon la revendication 1 ou 2, caractérisée en ce que les éléments de décharge et/ou de desserrage sont réalisés sous la forme de vie de desserrage (6) qui sont placées sur une première coquille (3, 4) et s'appuient sur la seconde coquille (4, 3).

4. - Rotule sans jeu selon les revendications 2 et 3, caractérisée en ce que les vis de serrage et de desserrage (5, 6) sont placées sur la même coquille.

5. - Rotule sans jeu selon l'une des revendications 2 à 4, caractérisée en ce que la longueur des vis de serrage (5) est grande par rapport à la longueur d'appui des vis de desserrage (6).

6. - Rotule sans jeu selon la revendication 1, caractérisée en ce que les éléments de décharge sont réalisés sous la forme de ressorts ou d'éléments intermédiaires à fort coefficient d'élasticité par rapport à celui des vis de serrage (5).

7. - Rotule sans jeu selon l'une des revendications 1 à 6, caractérisée en ce que les surfaces d'appui de la tête sphérique (1) et/ou les coquilles (3, 4) comportent un revêtement (7) qui présente des propriétés de frottement et/ou d'abrasion favorables.

8. - Ensemble d'articulation comportant au moins deux rotules sans jeu selon une ou plusieurs des revendications précédentes, caractérisé en ce que chaque coquille de coussinet de chaque rotule (15, 16, 17) est formée par un corps de base commun (21) recevant les rotules (15, 16, 17);

9. - Ensemble d'articulation selon la revendication 8, caractérisée en ce que les rotules (15, 16, 17) sont disposées dans le corps de base (21) de façon que des forces dont les lignes d'action sont sensiblement orthogonales puissent être transmises.

10. - Ensemble d'articulation selon la revendication 8 ou 9, caractérisé en ce que les rotules (15, 16, 17) sont disposées à la plus petite distance mutuelle possible.

11. - Ensemble d'articulation selon l'une des revendications 8 à 10, caractérisé en ce qu'une rotule (15) est placée en un point d'application théorique de forces (14), et en ce que la seconde rotule (16, 17) ou d'autres rotules sont placées à distance du point d'application théorique de forces (14).

12. - Ensemble d'articulation selon l'une des revendications 8 à 11, caractérisée en ce que toutes les rotules (15, 16, 17) sont placées à une même distance d'un point d'application théorique de forces (14).

13. - Ensemble d'articulation selon l'une des revendications 8 à 12, caractérisé en ce que les rotules (15, 16, 17) sont disposées de façon que les directions des lignes d'action des forces à transmettre passent par le point d'application théorique de forces (14), dans la position initiale de l'ensemble.

14. - Ensemble d'articulation selon l'une des revendications 8 à 13, caractérisé en ce que les rotules (15, 16, 17) présentent une dimension différente, en particulier pour la transmission de forces d'intensités différentes.

Figur 1

Figur 2a     Figur 2b

Figur 3

0 114 327

Fig. 4a

Fig. 4c

Fig. 4b

7

## Figur 5